# EUROPÄISCHE PATENTSCHRIFT

(11) **EP 2 794 369 B1**
(45) Veröffentlichungstag und Bekanntmachung des Hinweises auf die Patenterteilung: **06.04.2016**
(21) Anmeldenummer: 12819060.0
(22) Anmeldetag: 18.12.2012
(51) Int. Cl.: B60T 8/17, B60T 13/74

(54) **VERKABELUNGSEINRICHTUNG UND ELEKTRONISCHES BREMSSYSTEM FÜR EIN SCHWERLASTMODULFAHRZEUG UND FÜR EIN SCHWERLASTFAHRZEUG**
CABLING DEVICE AND ELECTRONIC BRAKE SYSTEM FOR A MODULAR HEAVY GOODS VEHICLE AND FOR A HEAVY GOODS VEHICLE
DISPOSITIF DE CÂBLAGE ET SYSTÈME DE FREINAGE ÉLECTRONIQUE POUR VÉHICULE MODULAIRE DE TRANSPORT LOURD ET POUR VÉHICULE LOURD

(30) Priorität: 19.12.2011 DE 102011121374
(43) Veröffentlichungstag der Anmeldung: 29.10.2014
(73) Patentinhaber: Goldhofer Aktiengesellschaft, 87700 Memmingen (DE)
(72) Erfinder: BÖER, Thomas, 87781 Ungerhausen (DE); BAADER, Armin, 87746 Erkheim (DE)
(74) Vertreter: Lemke, Jörg-Michael
(86) Internationale Anmeldenummer: PCT/EP2012/005222
(87) Internationale Veröffentlichungsnummer: WO 2013/091828

(56) Entgegenhaltungen:
- EP-A1- 1 717 121
- EP-A1- 2 060 457
- DE-A1- 10 216 564

## Beschreibung

Die Erfindung betrifft eine Verkabelungseinrichtung eines Schwerlastmodulfahrzeugs gemäß dem Oberbegriff des Anspruchs 1, ein elektronisches Bremssystem für ein Schwerlastmodulfahrzeug gemäß dem Oberbegriff des Anspruchs 4, sowie ein elektronisches Bremssystem für ein Schwerlastfahrzeug gemäß dem Oberbegriff des Anspruchs 9.

Schwerlastmodulfahrzeuge, auch als modulare Schwerlastfahrzeuge bezeichnet, diener zum flexiblen und wirtschaftlichen Transportieren schwerer Ladungen im Nutzlastbereich vor 80 t bis weit über 10.000 t, wobei je nach Anforderung des zu transportierenden Gutes mehrere Schwerlastmodulfahrzeuge zu einem zum Transport geeigneten Schwerlastfahrzeug kombiniert werden. Dabei können die Schwerlastmodulfahrzeuge sowohl in Längs- als auch in Querrichtung miteinander verbunden werden.

Ein solches Schwerlastmodulfahrzeug umfasst einen Rahmen mit beispielsweise einem kastenförmigen Mittelträger und stabilen Querträgern sowie einer verstärkten Ladefläche zum Aufnehmen der Last. Üblicherweise weist ein Schwerlastmodulfahrzeug mehrere Achsen mit Einzel- oder Zwillingsbereifung auf, wobei ein hydraulischer Achsabgleich der einzelnen Achsen je nach Ladung zu unterschiedlichen Abstützkreisen zusammengeschaltet werden kann, um gleiche Achslasten zu gewährleisten. Die Lenkung eines Schwerlastmodulfahrzeugs erfolgt üblicherweise über eine Allradzwangslenkung.

Derartige Schwerlastmodulfahrzeuge sind selbstverständlich mit Bremsen ausgestattet und entsprechen in ihrer Ausgestaltung den Bremsanlagen für Nutzfahrzeuge, wie sie beispielsweise in Bosch: "Kraftfahrtechnisches Taschenbuch", S. 674 - 701, 23. Auflage, Braunschweig, 1999, beschrieben sind. Eine Bremsanforderung wird bei den bekannten Bremsanlagen für Nutzfahrzeuge, insbesondere für Anhängefahrzeuge, über eine pneumatische Steuerleitung übertragen.

Zur Optimierung des Bremsvorgangs wurde das elektronische Bremssystem (EBS) mit Antiblockierregelung (ABS) und Antriebsschlupfregelung (ASR) auch in Nutzfahrzeugen eingeführt, wobei die Bremskomponenten über einen CAN-Bus miteinander verbunden sind und darüber angesteuert werden. Eine elektropneumatische Betriebsbremsanlage bleibt als unterlegte Sicherheitsebene verfügbar. Das elektronische Bremssystem EBS ist im Standardanhängerfahrzeugbau mittlerweile Stand der Technik und bringt auch im Sonderfahrzeugbau Vorteile. So wird über den CAN-Bus der Bremswunsch vom Zugfahrzeug zum Anhängermodul schneller übertragen, es können über den CAN-Bus weitere Informationen übertragen werden und die im elektronischen Bremssystem integrierte Antiblockierregelung hat einen besseren Regelzyklus als die übliche Antiblockierregelung. Das elektronische Anhänger-Bremssystem wird auch als TEBS (Trailer EBS) bezeichnet.

Für Nutzfahrzeuge in Kombination mit mehr als einem Anhänger, die auch als Roadtrains bezeichnet werden, Anhänger, deren Bauart eine Länge der CAN-Leitungen von mehr als 18 Meter bedingen, oder Anhänger, deren Bauart mehr als ein TEBS erfordern, muss ein Verstärker/Splitter für den CAN-Bus eingesetzt werden, um die Bremssignale über den CAN-Bus sicher dem jeweiligen TEBS oder elektronischen Anhänger-Bremssystem zuzuführen bzw. zu demselben weiter zu leiten. Derartige Verstärker/Splittermodule werden als Trailer Roadtrain Module oder kurz TRM bezeichnet und beispielsweise von der Firma Knorr-Bremse Group hergestellt und vertrieben. Weitergehende Informationen über elektronische Bremssysteme für Nutzfahrzeuge und Trailer Roadtrain Module sind auf der Webseite "www.knorr-bremse.com" zu finden.

Ein TRM umfasst mindestens drei Anschlüsse. Dabei dient der Anschluß "Front" zum Anschluss des vom vorigen Fahrzeug oder dem Zugfahrzeug ankommenden CAN-Buses, der ausgehende Anschluss "Local" dient zum Weiterleiten des CAN-Buses an das lokale TEBS und der Anschluss "REAR" dient zum Weiterleiten der CAN-Signale an das TRM des nächsten Fahrzeugs oder das TEBS des letzten Fahrzeugs in der Kette. Ein vierter Anschluss eines TRMs dient zum Anschluss externer Drucksensoren, die eine Bremsanforderung an das lokale elektronische Bremssystem erzeugen, basierend auf der elektropneumatischen Betriebsbremsanlage als unterlegter Sicherheitsebene.

Sonderfahrzeuge, insbesondere die oben erläuterten Schwerlastmodulfahrzeuge, können in beide Fahrtrichtungen bewegt werden und sind sowohl in Längs- als auch in Querrichtung miteinander verbindbar. Der Einsatz von elektronischen Bremssystemen in Schwerlastmodulfahrzeugen impliziert bei deren Kombination zu Schwerlastfahrzeugen, dass ein CAN-Bus zum Transportieren der Bremsanforderung an die lokalen elektronischen Bremssysteme gebildet werden muss, wobei die Flexibilitätseigenschaften der Schwerlastmodulfahrzeuge gewährleistet bleiben müssen.

Die Druckschrift DE 102 16 564 A1 betrifft ein Verfahren zum Datentausch in einem Fahrzeugzug, in dem die einzelnen Fahrzeuge über einen PCL-Datenbus miteinander verbunden sind und kommunizieren. Dabei besteht ein Fahrzeugzug aus einem Motorwagen und mindestens einem Anhänger, wobei der Anhänger an den Motorwagen gekoppelt ist. Ferner können an diesen Anhänger noch weitere Anhänger gekoppelt sein. Neben der mechanischen Kopplung sind alle die in den Fahrzeugen vorgesehenen Fahrzeugelektroniken über einen PLC-Datenbus miteinander verbunden, wobei die Fahrzeugelektroniken üblicherweise als ABS-Steuerelektroniken ausgestaltet sind.

In mindestens einer ABS-Steuerelektronik der Anhänger sind zusätzliche programmierbare Ausgangs- und Eingangs-Funktionen vorgesehen, die über die eigentliche ABS-Funktion hinausgehen und zur Durchführung von weiteren Betriebsfunktionen in diesem Fahrzeug dienen. Dabei übermittelt die mindestens eine Anhänger-ABS-Steuerelektronik mit Zusatzfunktionen die in ihr zusätzlich realisierten, programmierbaren Funktionalitäten automatisch und zyklisch über den PLC-Datenbus an alle anderen ABS-Steuerelektroniken, welche damit in der Lage sind, die dort aktuell programmierten Funktionalitäten zu erkennen. Die Steuerung dieser Zusatzfunktionen in der mit den spezifischen Funktionalitäten ausgerüsteten Anhänger-Fahrzeugelektronik wird dann über ein im Motorwagen vorgesehenes Eingabe-/Ausgabegerät vorgenommen, das entweder direkt oder indirekt über die Motorwagen-ABS-Steuerelektronik an den PLC-Datenbus angeschlossen ist.

Die Druckschrift EP 2 060 457 A1 betrifft ein Bremssteuermodul für einen Erstanhänger eines Lastkraftwagens, mit
einer Zugfahrzeug-Schnittstelle, die eine Zugfahrzeug-CAN-Schnittstelle zum Verbinden mit einem Zugfahrzeug-CAN-Anschluss eines Zugfahrzeugs, eine Zugfahrzeug-Spannungsversorgungs-Schnittstelle zum Verbinden mit einem Zugfahrzeug-Spannungsversorgungs-Anschluss des Zugfahrzeugs und eine Zugfahrzeug-Warnlampen-Schnittstelle zum Verbinden mit einem Zugfahrzeug-Warnlampen-Anschluss des Zugfahrzeugs umfasst, und mit
einer Zweitanhänger-Schnittstelle zum Anschließen eines Zweitanhängers, der an dem Erstanhänger angekoppelt ist, die eine Zweitanhänger-CAN-Schnittstelle zum Verbinden mit einem Zweitanhänger-CAN-Anschluss des Zweitanhängers, eine Zweitanhänger-Spannungsversorgungs-Schnittstelle zum Verbinden mit einem Spannungs-Anschluss des Zweitanhängers und eine Zweitanhänger-Wamlampen-Schnittstelle (44) zum Verbinden mit einem Zweitanhänger-Wamlampen-Anschluss (46) des Zweitanhängers umfasst.

Ferner betrifft die Druckschrift EP 1 717 121 A1 ein Bussystem zur Spannungsversorgung und Kommunikation eines Sattelzuges bestehend aus einem Zugfahrzeug und einem Sattelauflieger, wobei das Bussystem in dem ABS-Modul des Zugfahrzeugs residiert. Das Bussystem umfasst einen Buscontroller mit einem Busprotokoll und mindestens einen Busverbinder, der elektrisch mit dem ABS-Prozessor verbunden ist, eine Spannungsquelle und zumindest ein mit dem Busverbinder elektrisch verbundenes Zusatzsystem wie Sensoren oder Aktuatoren.

Der Erfindung liegt daher die Aufgabe zugrunde, eine Verkabelungseinrichtung für Schwerlastmodulfahrzeuge, ein elektronisches Bremssystem für ein Schwerlastmodulfahrzeug, sowie ein elektronisches Bremssystem für ein Schwerlastfahrzeug, bestehend aus Schwerlastmodulfahrzeugen, unter Beibehaltung der Flexibilität der Schwerlastmodulfahrzeuge zu schaffen.

Diese Aufgabe wird gelöst durch eine Verkabelungseinrichtung mit den Merkmalen des Anspruchs 1, ein elektronisches Bremssystem für ein Schwerlastmodulfahrzeug mit den Merkmalen des Anspruchs 4 sowie durch ein elektronisches Bremssystem für ein Schwerlastfahrzeug mit den Merkmalen des Anspruchs 9. Bevorzugte Ausführungsformen der Erfindung sind Gegenstand der Unteransprüche.

Die erfindungsgemäße Verkabelungseinrichtung eines Schwerlastmodulfahrzeugs zum Auf- und Abschalten einer Vielzahl von Datenkabel zum Zuführen und Weiterleiten von Bremssignaldaten an eine elektronische Bremssystemeinrichtung des Schwerlastmodulfahrzeugs, wobei die elektronische Bremssystemeinrichtung einen Dateneingang zum Empfang der Bremssignaldaten und einen Datenausgang zum Weiterleiten der Bremssignaldaten aufweist, schaltet aus der Vielzahl von Datenkabeln ein Datenkabel auf den Dateneingang der elektronischen Bremssystemeinrichtung und ein anderes Datenkabel auf den Datenausgang der elektronischen Bremssystemeinrichtung auf und die restlichen Datenkabel ab, wobei die Vielzahl der Datenkabel größer oder gleich vier ist. Dazu weist das Verkabelungseinrichtung eine Schaltlogik zur Auswahl der beiden auf die elektronische Bremssystemeinrichtung zu schaltenden Datenkabel und der abzuschaltenden Datenkabel auf, wobei abgeschaltete Datenkabel von der Verkabelungseinrichtung galvanisch getrennt werden.

Weiter bevorzugt sind die Datenkabel mit einer Kodierung beaufschlagt, mittels der die Schaltlogik eine Auswahl trifft. Dabei erfolgt vorzugsweise die Kodierung durch eine Spannungsaufschaltung auf vorbestimmte Leitungen der Datenkabel.

Das erfindungsgemäße elektronische Bremssystem eines Schwerlastmodulfahrzeugs, welches eine elektronische Bremssystemeinrichtung mit einem Dateneingang zum Empfang der Bremssignaldaten und einem Datenausgang zum Weiterleiten der Bremssignaldaten aufweist, wobei zum Zuführen und Weiterleiten von Bremssignaldaten das elektronische Bremssystem Datenkabel aufweist, umfasst
- eine im Vorangegangenen beschriebene Verkabelungseinrichtung, und
- vier Datenkabel zum Zuführen und Weiterleiten von Bremssignaldaten, wobei jedes Datenkabel an einer Seite eine Steckdose aufweist und an der anderen Seite mit der Verkabelungseinrichtung verbunden ist.

Vorzugsweise weist die elektronische Bremssystemeinrichtung eines Schwerlastmodulfahrzeugs ein Verstärker/Splittermodul TRM und ein elektronisches Bremssystemmodul TEBS auf.

Weiter bevorzugt ist an jeder Ecke des Schwerlastmodulfahrzeugs eine Steckdose angeordnet. Damit ist eine flexible Verbindung von Schwerlastmodulfahrzeugen in allen Varianten möglich und die Steckdosen sind gut zugänglich.

Die Datenkabel eines elektronischen Bremssystems eines Schwerlastmodulfahrzeugs weisen vorzugsweise einen CAN-Bus zum Übertragen der Bremsdatensignale an die Bremssystemeinrichtung auf. Zwar ist der Einsatz von CAN-Busen in Fahrzeugen üblich, aber es besteht auch die Möglichkeit des Einsatzes anderer Bussysteme.

Vorzugsweise weist ein Datenkabel n Leitungen auf, wobei n größer oder gleich 4 ist. Dabei werden zwei Leitungen für den CAN-Bus verwendet und zwei Leitungen dienen zur Kodierung und zum Ansteuern der Schaltlogik der Verkabelungseinrichtung. Beispielsweise bilden in einer bevorzugten Ausführungsform 10 Leitungen ein in einem Schwerlastmodulfahrzeug verwendetes Datenkabel, wobei neben den Leitungen für den CAN-Bus und die Kodierung die weiteren Leitungen zur Übertragung von Signalen und notwendiger Spannungen dienen.

Das erfindungsgemäße elektronische Bremssystem für ein Schwerlastfahrzeug von N miteinander verbundenen Schwerlastmodulfahrzeugen, wobei N größer oder gleich 2 ist. umfasst für jedes Schwerlastmodulfahrzeug ein oben erläutertes elektronisches Bremssystem, wobei die elektronischen Bremssysteme der Schwerlastmodulfahrzeuge untereinander durch zwischen den Schwerlastmodulfahrzeugen angeordnete Verbindungskabel so zusammengeschaltet sind, dass sich ein linearer Bus, insbesondere ein CAN-Bus, vom ersten bis zum letzten elektronischen Bremssystem der Schwerlastmodulfahrzeuge zur Ansteuerung der elektronischen Bremssystemeinrichtungen der Schwerlastmodulfahrzeuge ergibt.

Vorzugsweise sind die zwischen den Schwerlastmodulen angeordneten Verbindungskabel richtungsabhängig. Mit anderen Worten, die Verbindungskabel haben ein vorderes und ein hinteres Ende, wobei das vordere Ende mit einem vorderen Schwerlastmodulfahrzeug und das hintere Ende mit einem in CAN-Richtung hinteren Schwerlastmodulfahrzeug verbunden werden muss.

Bevorzugte Ausführungsformen der Erfindung werden nachfolgend anhand der Zeichnungen erläutert. Dabei zeigt:
- Fig. 1: eine Kombination mehrerer Schwerlastmodulfahrzeuge in schematischer Darstellung,
- Fig. 2: ein Schwerlastmodulfahrzeug mit elektronischer Bremssystemeinrichtung und einer Verkabelungseinrichtung,
- Fig. 3: die Kombination zweier Schwerlastmodulfahrzeuge in schematischer Darstellung,
- Fig. 4: die Verkabelungseinrichtung eines Schwerlastmodulfahrzeugs in Relaisform,
- Fig. 5: eine Realisierung der Verkabelungseinrichtung der Fig. 4, und
- Fig. 6: eine weitere Realisierung der Verkabelungseinrichtung der Fig. 4.

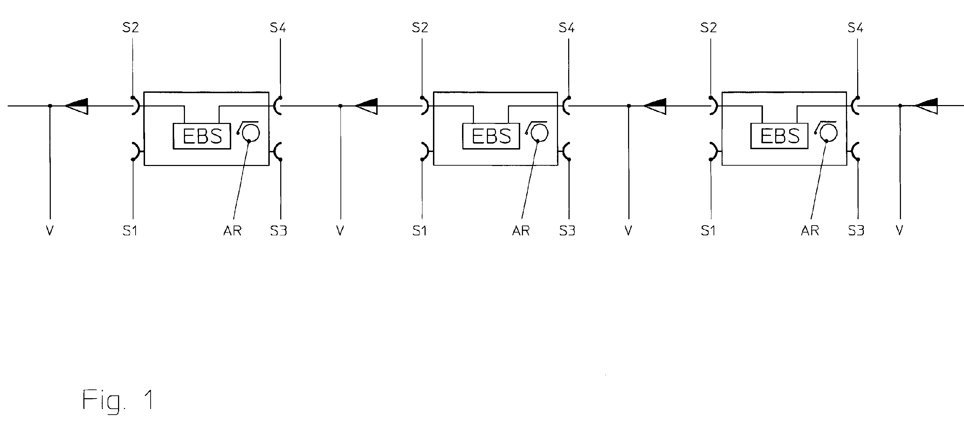

Fig. 1 zeigt einen Ausschnitt einer Kombination mehrerer Schwerlastmodulfahrzeuge zu einem Schwerlastfahrzeug, wobei in Fig. 1 drei Schwerlastmodulfahrzeuge N-1, N, N+1 dargestellt sind. Jedes Schwerlastmodulfahrzeug weist eine Achsrichtung AR auf, die durch die Stellung des Kniegelenks des Achsaggregats festgelegt ist. Dadurch wird für jedes Schwerlastmodulfahrzeug eine Grundrichtung definiert und "Vorne" ist die Richtung, in die das Kniegelenk zeigt. Somit ist auch die linke und rechte Seite eines Schwerlastmodulfahrzeugs N-1, N, N+1 festgelegt. Diese Definition bezieht sich nur auf das einzeln betrachtete Fahrwerk des Schwerlastmodulfahrzeugs. Bei Kombinationen der Schwerlastmodulfahrzeuge können die Fahrwerke auch vertauscht, d.h. Vorne mit Vorne und Hinten mit Hinten, gekoppelt werden. Ferner ist auch ein seitliches Kombinieren mit freier Kombination der Achsrichtungen AR möglich.

Jedes Schwerlastmodulfahrzeug N-1, N, N+1 weist an jeder Ecke eine Steckdose auf, wobei die Steckdose S1 an der linken vorderen Ecke, die Steckdose S2 an der rechten vorderen Ecke, die Steckdose S3 an der hinteren linken Ecke und die Steckdose S4 an der hinteren rechten Ecke angeordnet sind. Ferner weist jedes Schwerlastmodulfahrzeug eine elektronische Bremssystemeinrichtung EBS auf, die zum Bremsen des Schwerlastmodulfahrzeugs N-1, N, N+1 dient. Eine derartige Bremssystemeinrichtung eines Schwerlastmodulfahrzeugs umfasst beispielsweise ein TRM und ein TEBS, wie sie eingangs erläutert sind.

Die Schwerlastmodulfahrzeuge sind in dem Beispiel der Fig. 1 über die rechtsseitigen Steckdosen S2 und S4 mittels jeweiliger Verbindungskabel V verbunden, wobei über die Verbindungskabel ein CAN-Bus zum Zuführen des Bremssignals an die elektronische Bremssystemeinrichtung EBS realisiert wird. Dabei hat jede elektronische Bremssystemeinrichtung EBS eines Schwerlastmodulfahrzeugs N-1, N, N+1 genau einen Eingang für den CAN-Bus und genau einen Ausgang zur Weiterleitung des CAN-Buses an das nachfolgende Schwerlastmodulfahrzeug.

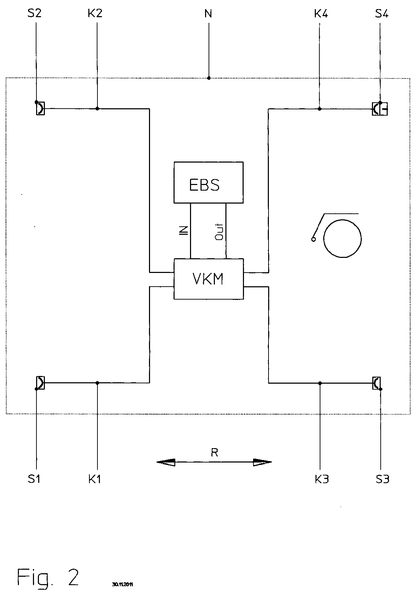

Eine detaillierte Darstellung der internen Datenkabelverbindungen eines Schwerlastmodulfahrzeugs ist der Fig. 2 zu entnehmen. Dargestellt ist das Schwerlastmodulfahrzeug N, welches über eine Vielzahl von Achsen verfügt. Die erste Achse soll in dem Schwerlastmodulfahrzeug der Fig. 2 linksseitig angeordnet sein, so dass sich die eingezeichnete Grundrichtung AR ergibt. Jede Ecke des Schwerlastmodulfahrzeugs weist eine Steckdose S1, S2, S3, S4 auf, mittels derer sich mehrere Schwerlastmodulfahrzeuge miteinander verbinden lassen.

Von den Steckdosen S1, S2, S3, S4 führen interne Datenkabel K1, K2, K3, K4 zu einer Verkabelungseinrichtung. Die Verkabelungseinrichtung VKM hat die Aufgabe, aus den Datenkabeln K1, K2, K3, K4 als Funktion der Steckdosenbelegung zwei Datenkabel auszuwählen und so auf die elektronische Bremsvorrichtung EBS des Schwerlastmodulfahrzeugs N aufzuschalten, dass ein linearer CAN-Bus entsteht. Dabei hat die elektronische Bremssystemeinrichtung EBS einen CAN-Buseingang IN und einen CAN-Busausgang OUT. Der Eingang IN und der Ausgang OUT der elektronischen Bremssystemeinrichtung EBS sind nicht vertauschbar, sondern der Eingang IN des betrachteten Schwerlastmodulfahrzeugs N muss mit dem CAN-Bus-Ausgang des vorherigen Schwerlastmodulfahrzeugs N-1 und der Ausgang OUT muss mit dem Eingang des nachfolgenden Schwerlastmodulfahrzeugs N+1 verbunden werden. Sollte das betrachtete Schwerlastmodulfahrzeug das erste Modul sein, so muss der Eingang IN der elektronischen Bremssystemeinrichtung mit dem Ausgang eines üblicherweise in der Sattelzugmaschine angeordneten Mastermoduls verbunden werden. Ist das betrachtete Schwerlastmodulfahrzeug das letzte Modul der Kombination, so endet der CAN-Bus in diesem Schwerlastmodulfahrzeug.

Zur Auswahl der benötigten internen Datenkabel K1, K2, K3, K4, weist die Verkabelungseinrichtung VKM eine Schaltlogik auf, die über Signale angesteuert wird, die über die Stecker der Verbindungskabel V auf die Steckdosen S1, S2, S3, S4 der internen Datenkabel K1, K2, K3, K4 gelegt werden. Weiterhin sorgt die Schaltlogik der Verkabelungseinrichtung VKM dafür, dass nicht beschaltete Datenkabel K1, K2, K3, K4 von der Verkabelungseinrichtung VKM bzw. von der elektronischen Bremsvorrichtung galvanisch getrennt sind und nicht als Antennen wirken können.

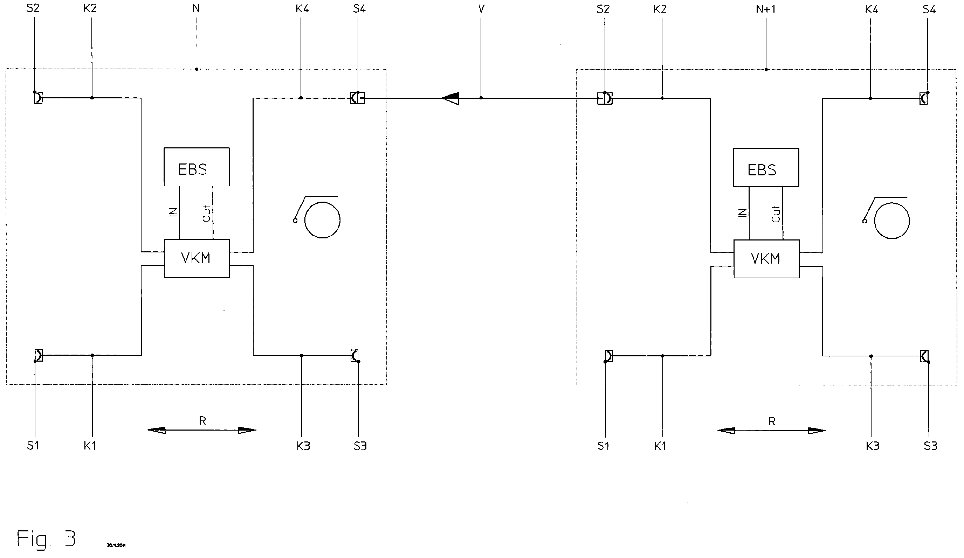

Fig. 3 zeigt zwei Schwerlastmodulfahrzeugs N, N+1, die über ein Verbindungskabel V miteinander verbunden sind, wobei das Verbindungskabel V die rechte hintere Steckdose S4 des vorderen Schwerlastmodulfahrzeugs N mit der rechten vorderen Steckdose S2 des nachfolgenden Schwerlastmodulfahrzeugs N+1 verbindet. Dabei ist das Verbindungskabel V richtungsabhängig, was durch den Pfeil angedeutet ist. Verbindungsabhängig bedeutet hier, dass das vordere Ende des Verbindungskabels V in Richtung des vorderen Schwerlastmodulfahrzeugs N, mit anderen Worten in Richtung des Mastermoduls der Zugmaschine, und das hintere Ende in Richtung des nachfolgenden Schwerlastmodulfahrzeugs N+1 ausgerichtet sein muss.

Die Schaltlogik der Verkabelungseinrichtung VKM des vorderen Schwerlastmodulfahrzeugs N muss nun sicherstellen, dass das interne Datenkabel K4 mit dem CAN-Ausgang OUT der elektronischen Bremssystemeinrichtung EBS des vorderen Schwerlastmodulfahrzeugs N verbunden wird, während diejenige der Verkabelungseinrichtung VKM des hinteren Schwerlastmodulfahrzeugs N+1 mit dem CAN-Eingang IN der elektronischen Bremssystemeinrichtung EBS des hinteren Schwerlastmodulfahrzeugs N+1 verbunden wird. Ferner müssen die jeweiligen Schaltlogiken sicherstellen, dass nicht benötigte interne Datenkabel galvanisch abgeschaltet werden.

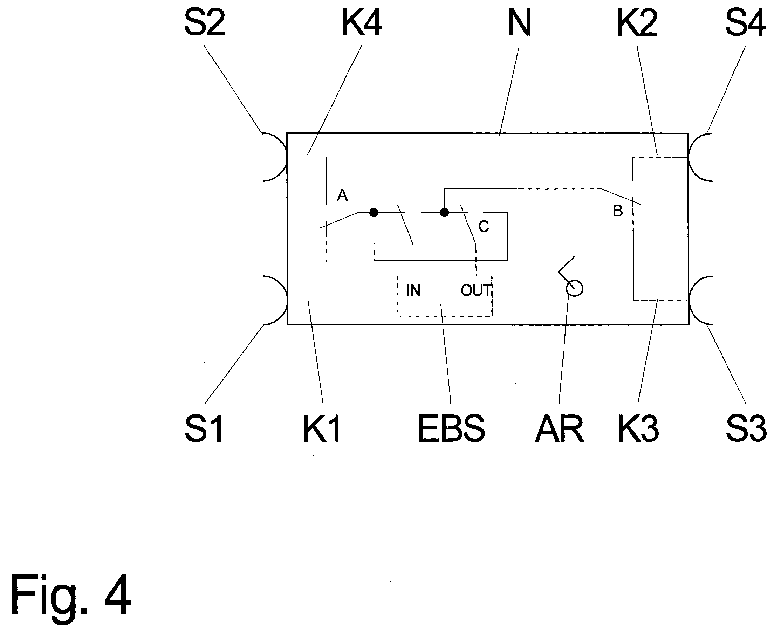

Fig. 4 zeigt eine mögliche Realisierung der Schaltlogik einer Verkabelungseinrichtung anhand eines schematisch dargestellten Schwerlastmodulfahrzeugs N mit den an jeder Ecke angeordneten Steckdosen S1, S2, S3, S4 und den entsprechenden internen Datenkabeln K1, K2, K3, K4 sowie der elektronischen Bremssystemeinrichtung EBS mit dem CAN-Eingang IN und dem CAN-Ausgang OUT, wobei die Grundrichtung AR ebenfalls angegeben ist.

Die Schaltlogik der Verkabelungseinrichtung ist hier durch drei Relais A, B und C realisiert. Dabei schaltet das Relais A zwischen den internen Datenkabeln K1, K2 der vorderen Steckdosen S1 und S2 um, das Relais B schaltet zwischen den internen Datenkabeln K3 und K4 der hinteren Steckdosen S3 und S4, und das Relais C schaltet zwischen dem Eingang IN und dem Ausgang OUT der elektronischen Bremssystemeinrichtung EBS um. Mit anderen Worten, das Relais A schaltet zwischen vorne links und vorne rechts, das Relais B schaltet zwischen hinten links und hinten rechts, und das Relais C schaltet zwischen vorne und hinten um.

Dargestellt ist in Fig. 4 der Grundzustand der durch die drei Relais A, B, C realisierten Schaltlogik, in dem die linke vordere Steckdose S1 mit dem CAN-Eingang IN der elektronischen Bremssystemvorrichtung EBS und die linke hintere Steckdose S3 mit dem CAN-Ausgang OUT der elektronischen Bremssystemvorrichtung EBS verbunden sind. Es ist daher im stromlosen Grundzustand der CAN-Bus von der linken vorderen CAN-Steckdose S1 zur linken hinteren Steckdose S3 durchgeschaltet. Durch die Beaufschlagung der Steckdosen mit geeigneten Codiersignalen muss die Schaltlogik beispielsweise erkennen, ob eine Steckdose, beispielsweise S2, mit einem hinteren Stecker eines Verbindungskabels und eine andere Steckdose, also S1, S3 oder S4, mit einem vorderen Stecker eines Verbindungskabels belegt ist.

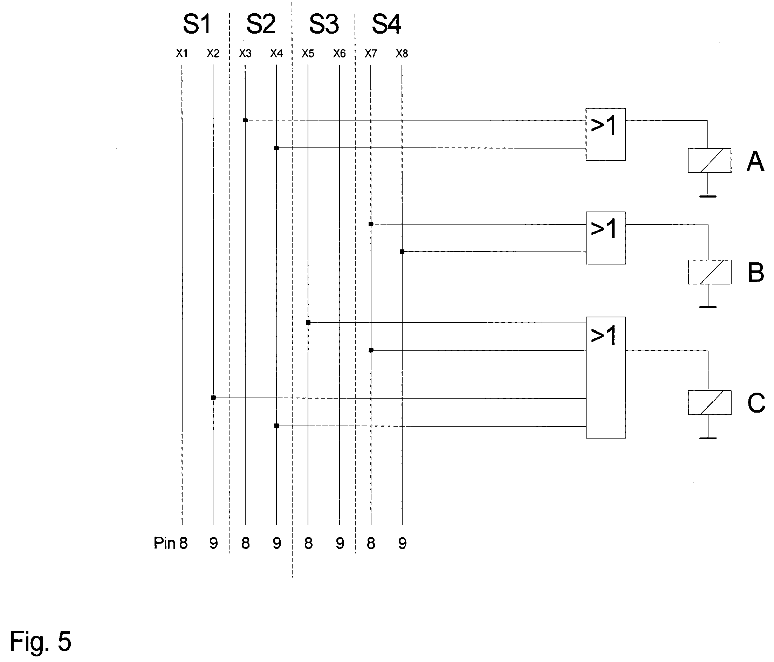

Fig. 5 zeigt eine Realisierung der Auswahlautomatik der Verkabelungseinrichtung durch Erweiterung vorhandener Steckverbindungen des Verbindungskabels V zwischen Schwerlastmodulfahrzeugen, so dass eine Kodierung realisiert wird. Dazu werden zwei ansonsten nicht benötigte Pins der beiden Stecker eines Verbindungskabels V verwendet, welche mittels Verbindungen innerhalb des jeweiligen Steckers eine Vorne-Kodierung und eine Hinten-Kodierung über eine Spannungsaufschaltung Ub+ erhalten. Die Spannungsversorgung UB+ erfolgt durch das vorzugsweise in der Zugmaschine angeordnete Mastermodul mittels des Einschaltens der Zündung.

Dabei wird auf einem Pin des vorderen Steckers, beispielsweise Pin 8, des Verbindungskabels V ein Vorne-Signal und auf dem anderen Pin des hinteren Steckers, beispielsweise Pin 9, des Verbindungskabels V ein Hinten-Signal geschaltet. Diese an den Kodierpins anliegende Spannung UB+ wird in einer lokalen Auswahllogik als Vorne-/Hinten-Signal ausgewertet und die Ein- bzw. Ausgänge an der elektronischen Bremssystemeinrichtung EBS umgeschaltet und zugeordnet. Des Weiteren muss ein Links- bzw. Rechtssignal, jeweils Vorn und Hinten, ausgewertet werden, welches ebenfalls über diese beiden Kodierpins realisiert wird, da die eingesetzten Verbindungskabel V eine eindeutig definierte Einbaurichtung haben und die eingesetzten Brücken auf dem vorderen Pin bzw. dem hinteren Pin diese als Vorne bzw. Hinten definieren.

In den Steckdosen S1, S2, S3 und S4 werden jeweils zwei Anschlüsse definiert, über die das Auswahlsignal an die Schaltlogik gelangt. Diese Anschlüsse sind X1 und X2 für die linke vordere Steckdose S1, X3 und X4 für die rechte vordere Steckdose S2, X5 und X6 für die linke hintere Steckdose S3, sowie X7 und X8 für die rechte hintere Steckdose S4. Dabei werden die Anschlüsse X1, X3, X5 und X7 mit dem Vorne-Signal und die Anschlüsse X2, X4, X6 und X8 dem Hinten-Signal beaufschlagt.

Bei der ersten bevorzugten Ausführungsform werden hochwertige HF-taugliche Relais zur Umschaltung des CAN Signals verwendet, da diese einen niedrigen Durchgangswiderstand, eine galvanische Trennung und einen großen Signalspannungsbereich (hier 24V CAN-Bus) bieten.

Dies bedeutet anhand von Relais A der Fig. 5, welches für die Umschaltung zwischen vorne links und vorne rechts bestimmt ist, dass es unbestromt die in Fig. 4 dargestellte Grundstellung vorne links einnimmt, d.h. es schaltet die CAN-Signale, welche an der linken vorderen Steckdose S1 anliegen, auf die elektronische Bremssystemvorrichtung. Dadurch müssen die Kodiersignale der vorderen linken Steckdose nicht ausgewertet werden. Bei einer Steckverbindung vorne rechts über die Steckdose S2 muss das Relais A umschalten. was bedeutet, dass das Signal X3 "Vorn Rechts" ausgewertet werden muss.

Nun ist es möglich, dass das Fahrwerk entgegengesetzt zur Fahrtrichtung steht und die Verbindung auf der rechten Seite richtig gesteckt wurde. In diesem Fall wäre lokal hinsichtlich des Fahrwerks die hintere, linke Verbindung X5 verbunden und bestromt. Relais B muss daher unbestromt bleiben und das CAN-Signal wird an die elektronische Bremssystemvorrichtung auf der gesteckten Seite weitergeleitet. Da X5 auf Steckdose S3 bestromt ist, schaltet die Logik das Relais C, wodurch das CAN-Signal OUT auf IN umgeschaltet wird und der CAN-Bus die korrekte Richtung erhält.

Da das Signal zur Umschaltung von Relais A sowohl von X3 als auch von X4 kommen kann, werden beide Signale über eine ODER-Verknüpfung logisch verbunden. Gleiche Überlegungen gelten für die Relais B und C, so dass sich die in der Fig. 5 dargestellte Logikschaltung ergibt. Da nur logische ODER-Verknüpfungen vorliegen, lässt sich diese Schaltung beispielsweise über eine Diodenlogik realisieren.

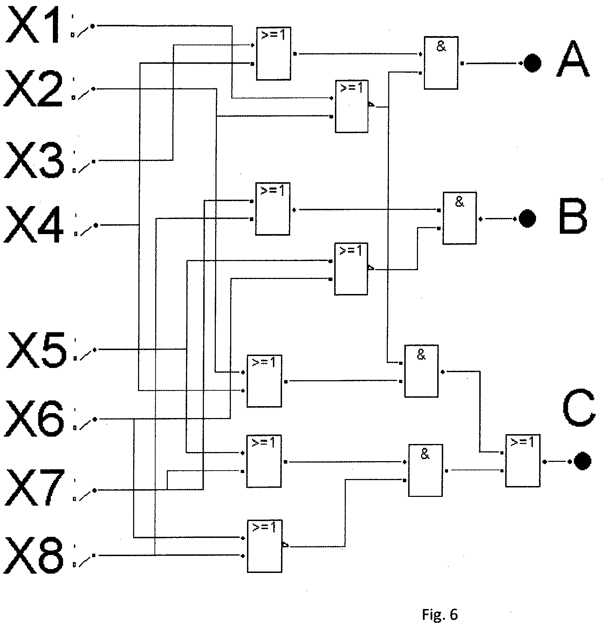

Fig. 6 zeigt eine weitere Ausführungsform der Logikschaltung der erfindungsgemäßen Verkabelungseinrichtung, wobei eine weitergehende Auswertung der an den Steckdosen anliegenden Signale X1 bis X8 erfolgt. Durch diese weitergehende Auswertung der Signale werden auch Fälle aufgefangen, bei denen beispielsweise zwischen zwei Schwerlastmodulfahrzeugen mehr als zwei Verbindungskabel gesteckt werden.

Unter Zuhilfenahme von Karnaugh-Diagrammen in der disjunktiven Normalform und den daraus abgeleiteten Booleschen Gleichungen ergibt sich die in Fig. 6 dargestellte logische Schaltung. Das Links- bzw. Rechtssignal wird bei allen untersuchten Kombinationsmöglichkeiten erkannt, was in der Praxis bedeutet, dass immer eine Verbindung des CAN-Bus zu anderen Fahrwerken realisiert wird. Auch wenn Doppelverbindungen bestehen, wird durch die Schaltung immer dominant nur eine bestimmt, da bei der Verbindung keine Richtung eingehalten werden muss.

In der nachfolgenden Tabelle sind die wesentlichen Verbindungen der möglichen Verbindungen zwischen Schwerlastmodulfahrzeugen mit vier an den Ecken angeordneten Steckdosen S1 bis S4 dargestellt:

**Tabelle 1**

| | X1 | X2 | X3 | X4 | X5 | X6 | X7 | X8 | A | B | C |
|---|---|---|---|---|---|---|---|---|---|---|---|
| 1 | 1 | 0 | 0 | 0 | 0 | 1 | 0 | 0 | 0 | 0 | 0 |
| 2 | 0 | 0 | 1 | 0 | 0 | 0 | 0 | 1 | 1 | 1 | 0 |
| 3 | 1 | 0 | 0 | 0 | 0 | 0 | 0 | 1 | 0 | 1 | 0 |
| 4 | 0 | 0 | 1 | 0 | 0 | 1 | 1 | 0 | 1 | 0 | 0 |
| 5 | 0 | 0 | 0 | 1 | 0 | 0 | 0 | 0 | 1 | 1 | 1 |
| 6 | 0 | 0 | 0 | 0 | 1 | 0 | 1 | 0 | 0 | 0 | 1 |
| 7 | 0 | 1 | 0 | 0 | 0 | 0 | 0 | 0 | 0 | 1 | 1 |
| 8 | 0 | 0 | 0 | 1 | 1 | 0 | 0 | 0 | 1 | 0 | 1 |
| 9 | 1 | 0 | 0 | 0 | 0 | 0 | 0 | 0 | 0 | 0 | 0 |
| 10 | 0 | 0 | 1 | 0 | 0 | 0 | 0 | 0 | 1 | 0 | 0 |
| 11 | 0 | 0 | 0 | 0 | 0 | 0 | 1 | 0 | 0 | 1 | 1 |
| 12 | 0 | 0 | 0 | 0 | 1 | 0 | 0 | 0 | 0 | 0 | 1 |

Dabei enthält Spalte 1 die Nummer der Verkabelungsvariante und die erste Zeile die binären Variablen X1 bis X8 sowie die daraus resultierenden logischen Ausgangsgrößen A, B und C zum Schalten der internen Datenkabel K1, K2, K3 und K4, wie dies in Fig. 4 dargestellt ist. So sagt die in Zeile 1 der Tabelle 1 angegebene Zuordnung aus, dass auf dem X1-Pin der vorderen linken Steckdose S1 durch die Verbindung mit dem hinteren Ende des Verbindungskabels das Vorne-Signale anliegt, während auf dem X6-Pin der hinteren linken Steckdose durch die Verbindung mit dem vorderen Ende des dortigen Verbindungskabel das Hinten-Signal anliegt. Folglich wird der CAN-Bus von links vorne nach links hinten geschaltet, wie dies in Fig. 4 als Grundzustand dargestellt ist. Die restlichen 11 Varianten der Tabelle 1 sind selbsterklärend.

### BEZUGSZEICHENLISTE

- AR: Achsrichtung
- A: Relais
- B: Relais
- C: Relais
- EBS: elektronische Bremssystemeinrichtung
- IN: CAN-Eingang EBS
- OUT: CAN-Ausgang EBS
- K1: Kabel 1
- K2: Kabel 2
- K3: Kabel 3
- K4: Kabel 4
- N-1: Schwerlastmodulfahrzeug
- N: Schwerlastmodulfahrzeug
- N+1: Schwerlastmodulfahrzeug
- R: Fahrtrichtung
- S1: Steckdose links vorne
- S2: Steckdose rechts vorne
- S3: Steckdose links hinten
- S4: Steckdose rechts hinten
- V: Verbindungskabel
- VKM: Verkabelungseinrichtung
- X1: Binäre Variable Steckdose S1
- X2: Binäre Variable Steckdose S1
- X3: Binäre Variable Steckdose S2
- X4: Binäre Variable Steckdose S2
- X5: Binäre Variable Steckdose S3
- X6: Binäre Variable Steckdose S3
- X7: Binäre Variable Steckdose S4
- X8: Binäre Variable Steckdose S4

## Patentansprüche

1. Verkabelungseinrichtung (VKM) eines Schwerlastmodulfahrzeugs (N-1, N, N+1) zum Auf- und Abschalten einer Vielzahl von Datenkabeln (K1, K2, K3, K4) zum Zuführen und Weiterleiten von Bremssignaldaten an eine elektronische Bremssystemeinrichtung (EBS) des Schwerlastmodulfahrzeugs, wobei die elektronische Bremssystemeinrichtung (EBS) einen Dateneingang (IN) zum Empfang der Bremssignaldaten und einen Datenausgang (OUT) zum Weiterleiten der Bremssignaldaten aufweist,
**dadurch gekennzeichnet,**
**dass** die Vielzahl der Datenkabel (K1, K2, K3, K4) größer oder gleich vier ist, und
**dass** die Verkabelungseinrichtung (VKM) aus der Vielzahl von Datenkabel (K1, K2, K3, K4) ein Datenkabel auf den Dateneingang (IN) der elektronischen Bremssystemeinrichtung (EBS) und ein anderes Datenkabel auf den Datenausgang (OUT) der elektronischen Bremssystemeinrichtung (EBS) aufschaltet und die restlichen Datenkabel abschaltet, wobei
die Verkabelungseinrichtung (VKM) eine Schaltlogik (A, B, C) zur Auswahl der beiden auf die elektronische Bremseinrichtung (EBS) zu schaltenden Datenkabel und der abzuschaltenden Datenkabel aufweist, und wobei abgeschaltete Datenkabel von der Verkabelungseinrichtung (VKM) galvanisch getrennt sind.

2. Verkabelungseinrichtung nach Anspruch 1, **dadurch gekennzeichnet, dass** die Datenkabel (K1, K2, K3, K4) mit einer Kodierung beaufschlagt werden, mittels der die Schaltlogik (A, B, C) eine Auswahl trifft.

3. Verkabelungseinrichtung nach Anspruch 2, **dadurch gekennzeichnet, dass** die Kodierung durch eine Spannungsaufschaltung auf vorbestimmte Leitungen des Datenkabels (K1, K2, K3, K4) erfolgt.

4. Elektronisches Bremssystem eines Schwerlastmodulfahrzeugs mit einer elektronischen Bremssystemeinrichtung (EBS) mit einem Dateneingang (IN) zum Empfang der Bremssignaldaten und einen Datenausgang (OUT) zum Weiterleiten der Bremssignaldaten, wobei zum Zuführen und Weiterleiten von Bremssignaldaten das elektronische Bremssystem Datenkabel (K1, K2, K3, K4) umfasst,
**dadurch gekennzeichnet, dass**
das elektronische Bremssystem eine Verkabelungseinrichtung (VKM) nach einem der vorangegangenen Ansprüche aufweist, und
vier Datenkabel (K1, K2, K3, K4) zum Zuführen und Weiterleiten von Bremssignaldaten besitzt, wobei jedes Datenkabel (K1, K2, K3, K4) an einer Seite eine Steckdose (S1, S2, S3, S4) aufweist und an der anderen Seite mit der Verkabelungseinrichtung (VKM) verbunden ist.

5. Elektronisches Bremssystem nach Anspruch 4, **dadurch gekennzeichnet, dass** die elektronische Bremssystemeinrichtung (EBS) ein Verstärker/Splittermodul (TRM) und ein elektronisches Bremssystemmodul (TEBS) aufweist.

6. Elektronisches Bremssystem nach Anspruch 4 oder 5, **dadurch gekennzeichnet, dass** jede Ecke des Schwerlastmodulfahrzeugs eine Steckdose (S1, S2, S3, S4) aufweist.

7. Elektronisches Bremssystem nach einem der Ansprüche 4 bis 6, **dadurch gekennzeichnet, dass** die Datenkabel (K1, K2, K3, K4) einen CAN-Bus zum Übertragen der Bremsdatensignale an das Bremssystemeinrichtung (EBS) aufweisen.

8. Elektronisches Bremssystem nach Anspruch 7, **dadurch gekennzeichnet, dass** das Datenkabel (K1, K2, K3, K4) n Leitungen aufweist, mit n größer oder gleich 4, wobei zwei Leitungen für den CAN-Bus und zwei Leitungen zur Kodierung und zum Ansteuern der Schaltlogik der Verkabelungseinrichtung (VKM) dienen.

9. Elektronisches Bremssystem für ein Schwerlastfahrzeug mit N miteinander verbundenen Schwerlastmodulfahrzeugen, wobei N größer oder gleich 2 ist,
**dadurch gekennzeichnet, dass**
das elektronische Bremssystem für ein Schwerlastfahrzeug N elektronische Bremssysteme eines Schwerlastmodulfahrzeugs nach einem der Ansprüche 5 bis 8 aufweist, wobei die elektronischen Bremssysteme der Schwerlastmodulfahrzeuge untereinander durch zwischen den Schwerlastmodulfahrzeugen (N-1, N, N+1) angeordnete Verbindungskabel (V) so zusammengeschaltet sind, dass sich ein linearer Bus, insbesondere ein CAN-Bus, vom ersten bis zum letzten elektronischen Bremssystem der Schwerlastmodulfahrzeuge zur Ansteuerung der elektronischen Bremssystemeinrichtungen (EBS) der Schwerlastmodulfahrzeuge (N-1, N, N+1) ergibt.

10. Elektronisches Bremssystem nach Anspruch 9, **dadurch gekennzeichnet, dass** die zwischen den Schwerlastmodulfahrzeugen (N-1, N, N+1) angeordneten Verbindungskabel (V) richtungsabhängig sind.

## Claims

1. Cabling device (VKM) of a heavy goods vehicle module (N-1, N, N+1) for connecting and disconnecting a large number of data cables (K1, K2, K3, K4) for supplying and forwarding brake signal data to an electronic brake system device (EBS) of the heavy goods vehicle module, wherein the electronic brake system device (EBS) has a data input (IN) for receiving the brake signal data and a data output (OUT) for forwarding the brake signal data,
**characterized**
**in that** the large number of data cables (K1, K2, K3, K4) is greater than or equal to four, and
**in that**, from amongst the large number of data cables (K1, K2, K3, K4), the cabling device (VKM) connects one data cable to the data input (IN) of the electronic brake system device (EBS) and another data cable to the data output (OUT) of the electronic brake system device (EBS) and disconnects the rest of the data cables, wherein
the cabling device (VKM) has a switching logic (A, B, C) for selecting the two data cables which are to be connected to the electronic brake device (EBS) and the data cables which are to be disconnected, and wherein disconnected data cables are electrically isolated from the cabling device (VKM).

2. Cabling device according to Claim 1, **characterized in that** the data cables (K1, K2, K3, K4) are subjected to coding by means of which the switching logic (A, B, C) makes a selection.

3. Cabling device according to Claim 2, **characterized in that** the coding is performed by applying a voltage to predetermined lines of the data cable (K1, K2, K3, K4) .

4. Electronic brake system of a heavy goods vehicle module comprising an electronic brake system device (EBS) with a data input (IN) for receiving the brake signal data and a data output (OUT) for forwarding the brake signal data, wherein the electronic brake system comprises data cables (K1, K2, K3, K4) for supplying and forwarding brake signal data,
**characterized in that**
the electronic brake system has a cabling device (VKM) according to one of the preceding claims, and
has four data cables (K1, K2, K3, K4) for supplying and forwarding brake signal data, wherein each data cable (K1, K2, K3, K4) has a plug socket (S1, S2, S3, S4) at one end and is connected to the cabling device (VKM) at the other end.

5. Electronic brake system according to Claim 4, **characterized in that** the electronic brake system device (EBS) has an amplifier/splitter module (TRM) and an electronic brake system module (TEBS).

6. Electronic brake system according to Claim 4 or 5, **characterized in that** each corner of the heavy goods vehicle module has a plug socket (S1, S2, S3, S4).

7. Electronic brake system according to one of Claims 4 to 6, **characterized in that** the data cables (K1, K2, K3, K4) have a CAN bus for transmitting the brake data signals to the brake system device (EBS).

8. Electronic brake system according to Claim 7, **characterized in that** the data cable (K1, K2, K3, K4) has n lines, wherein n is greater than or equal to 4, wherein two lines are used for the CAN bus and two lines are used for coding and for driving the switching logic of the cabling device (VKM).

9. Electronic brake system for a heavy goods vehicle with N heavy goods vehicle modules which are connected to one another, wherein N is greater than or equal to 2,
**characterized in that**
the electronic brake system for a heavy goods vehicle has N electronic brake systems of a heavy goods vehicle module according to one of Claims 5 to 8, wherein the electronic brake systems of the heavy goods vehicle modules are interconnected by connection cables (V) which are arranged between the heavy goods vehicle modules (N-1, N, N+1) such that a linear bus, in particular a CAN bus, is produced from the first to the last electronic brake system of the heavy goods vehicle modules for driving the electronic brake system devices (EBS) of the heavy goods vehicle modules (N-1, N, N+1).

10. Electronic brake system according to Claim 9, **characterized in that** the connection cables (V) which are arranged between the heavy goods vehicle modules (N-1, N, N+1) are direction-dependent.

## Revendications

1. Dispositif de câblage (VKM) d'un véhicule modulaire lourd (N-1, N, N+1) pour connecter et déconnecter une pluralité de câbles de données (K1, K2, K3, K4) destinés à amener et à retransmettre des données de signaux de freinage à une installation de système de freinage électronique (EBS) du véhicule modulaire lourd, l'installation de système de freinage électronique (EBS) comportant une entrée de données (IN) pour la réception des données de signaux de freinage et une sortie de données (OUT) pour la retransmission des données de signaux de freinage,
**caractérisé en ce que**
la pluralité des câbles de données (K1, K2, K3, K4) est supérieure ou égale à quatre et
**en ce que** le dispositif de câblage (VKM) constitué de la pluralité de câbles de données (K1, K2, K3, K4) connecte un câble de données sur l'entrée de données (IN) de l'installation de système de freinage électronique (EBS) et un autre câble de données sur la sortie de données (OUT) de l'installation de système de freinage électronique (EBS) et déconnecte les câbles de données restants,
le dispositif de câblage (VKM) comportant une logique de commutation (A, B, C) pour la sélection des deux câbles de données qui doivent être connectés sur l'installation de freinage électronique (EBS) et des câbles de données qui doivent être déconnectés et les câbles de données déconnectés étant galvaniquement isolés du dispositif de câblage (VKM).

2. Dispositif de câblage selon la revendication 1, **caractérisé en ce que** les câbles de données (K1, K2, K3, K4) sont soumis à un codage, au moyen duquel la logique de commutation (A, B, C) opère un choix.

3. Dispositif de câblage selon la revendication 2, **caractérisé en ce que** le codage s'effectue par l'application d'une tension sur des lignes prédéfinies du câble de données (K1, K2, K3, K4).

4. Système de freinage électronique d'un véhicule modulaire lourd, avec une installation de système de freinage électronique (EBS) avec une entrée de données (IN) pour la réception des données de signaux de freinage et une sortie de données (OUT) pour la retransmission des données de signaux de freinage, le système de freinage électronique comprenant des câbles de données (K1, K2, K3, K4) pour amener et retransmettre des données de signaux de freinage,
**caractérisé en ce que**
le système de freinage électronique comporte un dispositif de câblage (VKM) selon l'une quelconque des revendications précédentes et
dispose de quatre câbles de données (K1, K2, K3, K4), pour amener et retransmettre des données de signaux de freinage, chaque câble de données (K1, K2, K3, K4) comportant sur un côté une prise femelle (S1, S2, S3, S4) et sur l'autre côté, étant relié avec le dispositif de câblage (VKM).

5. Système de freinage électronique selon la revendication 4, **caractérisé en ce que** l'installation de système de freinage électronique (EBS) comporte un module amplificateur/fragmenteur (TRM) et un module de système de freinage électronique (TEBS).

6. Système de freinage électronique selon la revendication 4 ou la revendication 5, **caractérisé en ce que** chaque coin du véhicule modulaire lourd comporte une prise fermelle (S1, S2, S3, S4).

7. Système de freinage électronique selon l'une quelconque des revendications 4 à 6, **caractérisé en ce que** les câbles de données (K1, K2, K3, K4) comportent un bus CAN pour la transmission des signaux de données de freinage à l'installation de système de freinage (EBS).

8. Système de freinage électronique selon la revendication 7, **caractérisé en ce que** le câble de données (K1, K2, K3, K4) comprend n lignes, avec n supérieur ou égal à 4, deux lignes servant pour le bus CAN et deux lignes servant au codage ou à l'amorçage de la logique de commutation du dispositif de câblage (VKM).

9. Système de freinage électronique pour un véhicule lourd, avec N véhicules modulaires lourds reliés les uns aux autres, N étant supérieur ou égal à 2,
**caractérisé en ce que**
le système de freinage électronique pour un véhicule lourd comporte N systèmes de freinage électroniques d'un véhicule modulaire lourd selon l'une quelconque des revendications 5 à 8, les systèmes de freinage électroniques des véhicules modulaires lourds étant interconnectés par des câbles de liaison (V) placés entre les véhicules modulaires lourds (N-1, N, N+1), de telle sorte qu'il en résulte un bus linéaire, notamment un bus CAN, du premier jusqu'au dernier système de freinage électronique des véhicules modulaires lourds, pour l'amorçage des installations de systèmes de freinage (EBS) des véhicules modulaires lourds (N-1, N, N+1).

10. Système de freinage électronique selon la revendication 9, **caractérisé en ce que** les câbles de liaison (V) placés entre les véhicules modulaires lourds (N-1, N, N+1) dépendent de la direction.
